# EUROPÄISCHE PATENTSCHRIFT

(11) **EP 2 468 084 B1**
(45) Veröffentlichungstag und Bekanntmachung des Hinweises auf die Patenterteilung: **26.03.2014**
(21) Anmeldenummer: 11191457.8
(22) Anmeldetag: 01.12.2011
(51) Int. Cl.: A01C 7/12

(54) **Dosiereinrichtung zum Dosieren von Saatgut**
Dosing equipment for dosing seeds
Dispositif de dosage pour le dosage de semences

(30) Priorität: 22.12.2010 DE 102010055665
(43) Veröffentlichungstag der Anmeldung: 27.06.2012
(73) Patentinhaber: Kverneland ASA, 4355 Kvernaland (NO)
(72) Erfinder: Falinski, Jürgen, 59494 Soest (DE); Tomberge, Christoph, 59519 Möhnesee (DE)
(74) Vertreter: Schweiger, Johannes

(56) Entgegenhaltungen:
- EP-A1- 1 003 360
- WO-A1-2008/150241
- WO-A2-01/49100
- US-A- 4 705 220

## Beschreibung

Die vorliegende Erfindung betrifft eine Dosiereinrichtung zum Dosieren von Saatgut und/oder Dünger aus einem Saatgut- und/oder einem Düngerbehälter gemäß Patentanspruch 1 sowie einer Verteilmaschine zum Ausbringen von Saatgut und/oder Dünger mit einer Dosiereinrichtung pro Säreihe gemäß Patentanspruch 8.

Derartige Dosiergeräte werden bei landwirtschaftlichen Maschinen eingesetzt, um Saatgut und/oder Dünger präzise zu dosieren und anschließend auf landwirtschaftlichen Flächen auszubringen.

Derartige Dosiergeräte sind beispielsweise in der EP 0 094 583 beschrieben. Um den Verlust bei der Förderung des teilweise kostspieligen Saatguts/Düngers zu minimieren, wurde im Stand der Technik versucht, den Förderkanal möglichst dicht auszubilden.

Eine Einzelkornsämaschine mit Dosiereinrichtung ist in der WO 01/4100 A2 offenbart,

Ein anderer Weg wird bei dem Dosiergerät gemäß der DE 44 11 000 C1 beschrieben, bei dem der mittels einer Ausnehmung 8 und eines Abgabebereiches 9 zwischen dem Zellenrad und der Gehäusewand in dem dort vorhandenen Spalt eingeklemmtes Saatgut befreit werden kann. Das Saatgut wird durch das Vorsehen der Ausnehmung und des Abgabebereichs in den Förderkanal zurückgeführt und ausgegeben.

Hieraus resultiert zwar eine an sich vorteilhafte Befreiung des Saatguts aus dem Spalt zwischen dem Zellenrad und der Gehäusewand. Es kommt jedoch zu unkontrollierten Effekten bei der Ausbringung des Saatguts, indem das eingeklemmte Saatgut beziehungsweise Saatgutfragmente, die teilweise nicht mehr keimfähig sind, gemeinsam mit dem planmäßig ausgebrachten Saatgut ausgesät werden.

Aufgabe der vorliegenden Erfindung ist es daher, eine Dosiereinrichtung anzugeben, mit der gleichzeitig eine optimale Dosierung mit geringst möglichen Dosierfehlern sowie einfachem und kostengünstigem Aufbau ermöglicht wird. Gleichzeitig soll ein einfacher Austausch des Förderrads möglich sein.

Diese Aufgabe wird mit den Merkmalen der Patentansprüche 1 und 8 erfüllt. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart und in beliebiger Kombination beanspruchbar sein.

Der Erfindung liegt der Gedanke zugrunde, dass zumindest eine Reinigungsöffnung ausschließlich das Innere des Förderrades beaufschlagend angeordnet ist. Somit wird fehlgeleitetes Saatgut oder sonstige Verschmutzungen beziehungsweise Staub aus dem Inneren des Förderrades, insbesondere durch dessen Rotation oder Erschütterungen beim Fahren, aus der Dosiereinrichtung ausgetragen und im Gegensatz zum Stand der Technik nicht wieder in den Förderkanal zurückgeleitet. Dadurch werden auch etwaige Schaltmittel zum Schalten des Förderrades in verschiedene Schaltzustände während des Betriebs weniger zugesetzt und deren Funktion über längere Zeit sichergestellt. Die vorliegende Erfindung betrifft eine Dosiereinrichtung zur Volumenförderung und nicht zur Einzelkornförderung, wobei insbesondere auf Grund der unterschiedlichen Saatgutabmessungen das Zusetzen des Förderrads wesentlich problematischer ist.

Mit anderen Worten: Die Reinigungsöffnung überragt nicht den Außenumfang des Förderrads, so dass zwischen dem Förderrad und der Seitenwand des Gehäuses eingeklemmtes Saatgut auch nicht in den Förderkanal gelangt. Zunächst ist erfindungsgemäß vorgesehen, dass das eingeklemmte Saatgut in das Innere des Förderrades gelangt und von dort über die Reinigungsöffnung ins Freie ausgetragen wird.

Eine unkontrollierte Ausbringung von zum Teil durch die Relativbewegung des Förderrads zur Seitenwand zerstörtes Saatgut beziehungsweise Saatgutfragmente, die nicht mehr keimfähig sein können, wird erfindungsgemäß daher vermieden beziehungsweise nicht in die für das keimfähige Saatgut vorgegebene Spur ausgegeben, sondern neben der Spur auf dem Feld liegen bleiben oder in einem entsprechend am Dosiergerät vorgesehenen Auffangbehälter aufgefangen werden.

Gleichzeitig wird mit der vorliegenden Erfindung eine Reinigung des Inneren beziehungsweise eines Innenraums des Förderrades ermöglicht, in welchem der Antrieb und gegebenenfalls Schaltelemente zum Umschalten des Förderrades zwischen verschiedenen Schaltzuständen angeordnet sind. Damit kann ein längerer, beeinträchtigungsfreier Betrieb jeder Dosiereinrichtung gewährleistet werden.

Der Förderkanal für das Saatgut besteht demnach aus den Förderkanal begrenzenden, starren Wandungen und dem gegenüber den Wandungen in Förderrichtung F des Saatguts rotierenden Förderrad. Soweit die Schnittstelle des beweglichen Förderrades und der unbeweglichen Seitenwand betroffen ist, geht die vorliegende Erfindung daher einen Zwischenweg zu einer sehr aufwendigen und den Wechsel der Förderräder erschwerenden Abdichtung des Förderrads gegenüber der Seitenwand und dem in der DE 44 11 000 C1 vorgesehenen Spalt, der zur Vermeidung einer Zerstörung des eingeklemmten Saatguts dort nicht zu klein sein darf. Erfindungsgemäß ist dagegen vorgesehen, dass der Spalt auf ein Minimum reduziert wird, bei dem eine etwaig vorhandene Reibung zwischen jeder (seitlich vom Förderrad angeordneten) Seitenwand und dem Förderrad noch akzeptabel ist.

Gemäß einer vorteilhaften Ausführungsform der Erfindung ist vorgesehen, dass die Reinigungsöffnung die Form eines, insbesondere konzentrisch zum Förderrad ausgebildeten, Ringabschnitts aufweist. Durch die Form eines Ringabschnitts wird der Austrag von fehlgeleitetem Saatgut beziehungsweise sonstigen Verschmutzungen aus dem Inneren des Fördererrades beschleunigt.

Dies insbesondere dann, wenn gemäß einer weiteren vorteilhaften Ausführungsform der Außenradius des Ringabschnitts im Wesentlichen, insbesondere exakt, dem Radius des Innenumfangs des Förderrades entspricht.

Der Austrag beziehungsweise Transport der Verschmutzungen oder des fehlgeleiteten Saatguts wird dadurch weiter verbessert, indem Austragsmittel vorgesehen sind, insbesondere indem der Radius des Innenumfangs des Förderrads mit zunehmendem Abstand von zumindest einer Reinigungsöffnung abnimmt. Dadurch wird der Austrag von im Inneren des rotierenden Förderrades angeordneten Verschmutzungen beschleunigt.

Ein ähnlicher Effekt wird erreicht, indem als Austragsmittel das Förderrad an seinem Innenumfang zumindest teilweise konisch ausgebildet ist.

Gemäß einer weiteren, vorteilhaften Ausführungsform der Erfindung ist vorgesehen, dass das Förderrad an seinem Innenumfang eine Förderschnecke als Austragsmittel aufweist, die durch Rotation des Förderrades einen Austrag von fehlgeleitetem Saatgut oder Verschmutzungen über die Reinigungsöffnung automatisch impliziert.

Mit Vorteil ist erfindungsgemäß weiterhin vorgesehen, dass die Reinigungsöffnung, insbesondere durch eine seitlich an der Dosiereinrichtung anordenbare oder angebrachte Düse (Austragsmittel), mit einem auf die Reinigungsöffnung ausgerichteten Fluidstrom, insbesondere Druckluft, beaufschlagbar ist. Dabei ist es besonders vorteilhaft, wenn zwei Reinigungsöffnungen gegenüberliegend in den das Innere des Förderrades begrenzenden Seitenwänden vorgesehen sind, da dann ein gerichteter Förderstrom erzeugt werden kann. Dies ist besonders dann der Fall, wenn die gegenüberliegend angeordneten Reinigungsöffnungen fluchtend ausgerichtet sind.

Das Förderrad beziehungsweise Dosierrad besteht erfindungsgemäß aus einem äußeren und einem inneren Hohlzylinder. Die Wandstärken der Hohlzylinder sind erfindungsgemäß so groß gewählt, dass sie den Belastungen im Betrieb standhalten, gleichzeitig aber wegen der damit verbundenen Gewichtsersparnis der rotierenden Teile auf ein Minimum reduziert, wodurch auch die Herstellungskosten sinken.

Die beiden Hohlzylinder weisen einen relativen Abstand zueinander auf, so dass sich zwischen der inneren Mantelfläche des äußeren Hohlzylinders und der äußeren Mantelfläche des inneren Hohlzylinders eine Hohlstruktur ergibt, die im Inneren des Förderrades angeordnet ist. Beide Hohlzylinder sind im Bereich mindestens einer ihrer beiden gemeinsamen Seitenflächen durch eine Seitenwand in Form eines Kreisringes miteinander verbunden, wobei der Durchmesser der Seitenwand durch den Innendurchmesser des äußeren Hohlzylinders vorgegeben ist. Die Fläche der mindestens einen Seitenwand des Dosierrades weist insbesondere mindestens einen, vorzugsweise mehrere Durchbrüche auf.

Eine stabilere Ausführung wird erreicht, indem an beiden Seitenflächen solche unterbrochenen Seitenwände vorgesehen sind. Erfindungsgemäß denkbar und mit geringen Herstellkosten und Bauteilgewicht verbunden, ist eine einzige Seitenwand mit Durchbrüchen vorgesehen, während auf der gegenüberliegenden Seitenfläche keine Seitenwand vorgesehen ist. Hierdurch wird außerdem die Reinigungswirkung verbessert beziehungsweise der Austrag von Verunreinigungen erleichtert.

Die außenliegende Mantelfläche des äußeren Hohlzylinders, also der Außenumfang des Förderrades, weist Dosiernocken auf, mit welchen das Saatgut von einem Saatgutbehälter über den Zulauf durch den Förderkanal zu einem Dosierabgang transportiert wird.

Gelangt nun Material in den Spalt zwischen dem Förderrad und einer der Seitenwände des Förderkanals beziehungsweise des Gehäuses, so gelangt dieses Material in den Hohlraum, also in das Innere des Förderrades. Durch die erfindungsgemäße Minimierung des Spalts zwischen dem Förderrad und den Seitenwänden wird bereits eine Minimierung des Materialeintrags in die Hohlstruktur beziehungsweise das Innere des Förderrades erreicht.

Soweit doch, beispielsweise durch Abnutzung des Förderrades bedingt, Material in das Innere des Förderrades eindringt, ist in der Seitenwand beziehungsweise vorzugsweise beiden Seitenwänden jeweils gegenüberliegend eine Reinigungsöffnung in Form einer Aussparung der Seitenwand vorgesehen. Die Aussparung ist dabei konzentrisch zum Inneren Hohlzylinder und/oder äußeren Hohlzylinder. Die Reinigungsöffnung weist dabei die Form eines Ringabschnitts auf. Vorzugsweise ist der kleinere Radius beziehungsweise innere Radius des Ringabschnitts gleich dem Radius des inneren Hohlzylinders und der äußere oder größere Radius des Ringabschnitts ist gleich dem inneren Radius des äußeren Hohlzylinders. Der Ringabschnitt erstreckt sich vorzugsweise mindestens über 1/8 des Umfangs des Förderrades, jedoch weniger als die Hälfte des Umfanges, noch bevorzugter etwa über 1/5 bis 1/4 des Umfangs.

Es ist von Vorteil, wenn die Reinigungsöffnung am Umfang des Förderrades von dem Förderkanal abgewandt ist. Somit ist die Reinigungsöffnung ohne Kontakt zum Förderkanal, so dass ein Austrag von im Förderkanal befindlichem Saatgut aus der Dosiereinrichtung verhindert wird.

Die innere Mantelfläche des äußeren Hohlzylinders des Förderrades ist in vorteilhafter Ausführungsform im Innenumfang in Axialrichtung schräg beziehungsweise mit einer kegelförmigen Innenform versehen, so dass auf diese Weise das Material auf Grund des Gefälles zu der Seitenwand und damit zur Reinigungsöffnung geleitet wird.

Auf dieser inneren Mantelfläche können in einer weiteren vorteilhaften Ausführungsform der Erfindung ein oder mehrere spiralförmige Erhebungen zur Ausbildung einer Förderschnecke vorgesehen sein, damit das Material auf diese Weise mechanisch zur Reinigungsöffnung in der Seitenwand gefördert wird.

Die Erfindung sieht außerdem vor, dass eine druckluftunterstütze Reinigung der Dosiereinrichtung entweder über das manuelle Vorbeiführen einer Düse bei Wartungsarbeiten oder durch die Anordnung einer oder mehrerer Düsen im Bereich der Aussparung erfolgen kann. Hierbei ist es von besonderem Vorteil, wenn beidseitig des Innenradius in beiden Seitenwänden gegenüberliegend Reinigungsöffnungen vorgesehen sind, damit über die Druckluft Material ausgetragen werden kann, indem die Druckluft an der einen Seite einen und an der anderen Seite austritt.

Bei Fixierung einer Düse an der Dosiereinrichtung beziehungsweise der Verteilmaschine ist es vorteilhaft, die Druckluft intermittierend auf die Reinigungsöffnung in bestimmten Intervallen zu richten, wobei der Verschmutzungsgrad pro Zeiteinheit eine Rolle spielen kann.

Gemäß einer bevorzugten Ausführungsform ist es erfindungsgemäß denkbar, die Druckluft vom Drucksystem des Schleppers zu nutzen, wobei eine entsprechende Druckluftverbindung zwischen Schlepper und der Dosiereinrichtung der Verteilmaschine vorgesehen wird. Bei jedem Bremsvorgang wird dann ein Druckluftstoß zur Reinigung des Dosiergerätes genutzt, was die Energieeffizienz der Druckluftreinigung optimiert.

Alternativ ist es denkbar, die pneumatische Versorgung der Verteilmaschine anzuzapfen.

Gemäß einer weiteren Ausführungsform der Erfindung ist das Förderrad in ein Normalsärad und ein Feinsärad unterteilt, die seitlich nebeneinander angeordnet sind und mittels eines nicht näher beschriebenen Kupplungsstücks miteinander verbunden werden. Zur Feinsaat wird die Kupplung getrennt, damit nur noch das Feinsärad die Dosierung des Saatgutes übernimmt. In diesem Fall ist vorgesehen, dass beide Dosierräder in ihrem Inneren Durchbrüche aufweisen, damit eine Reinigung von der einen zu der anderen Seite des Dosiergeräts möglich ist. Soweit am Umfang nur einige Durchbrüche vorgesehen sind, ist eine synchrone Bewegung der Dosierräder sinnvoll und bei mehreren Durchbrüchen reicht auch eine teilweise Überdeckung aus, um eine ausreichende Reinigungswirkung zu erzielen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine schematische Perspektivansicht eines Ausschnitts der erfindungsgemäßen Verteilmaschine,

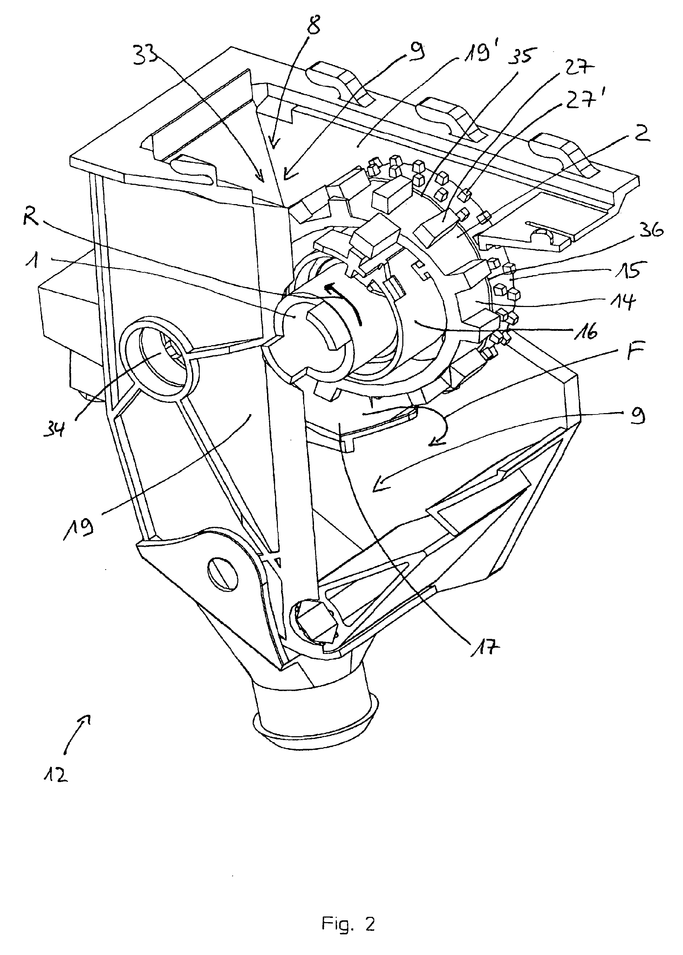

- Figur 2: eine schematische, teilweise aufgeschnittene Perspektivansicht der erfindungsgemäßen Dosiereinrichtung,
- Figur 3: eine schematische, teilweise aufgeschnittene Perspektivansicht der erfindungsgemäßen Dosiereinrichtung,
- Figur 4: eine schematische Perspektivansicht eines erfindungsgemäßen Förderrades,
- Figur 5: eine schematische Perspektivansicht einer erfindungsgemäßen Ausführungsform der Dosiereinrichtung mit einer Düse und
- Figur 6: eine schematische Perspektivansicht einer Ausführungsform eines Normaldosierrades der Dosiereinrichtung.

In den Figuren sind gleiche Bauteile und Bauteile mit der gleichen Funktion mit den gleichen Bezugszeichen gekennzeichnet.

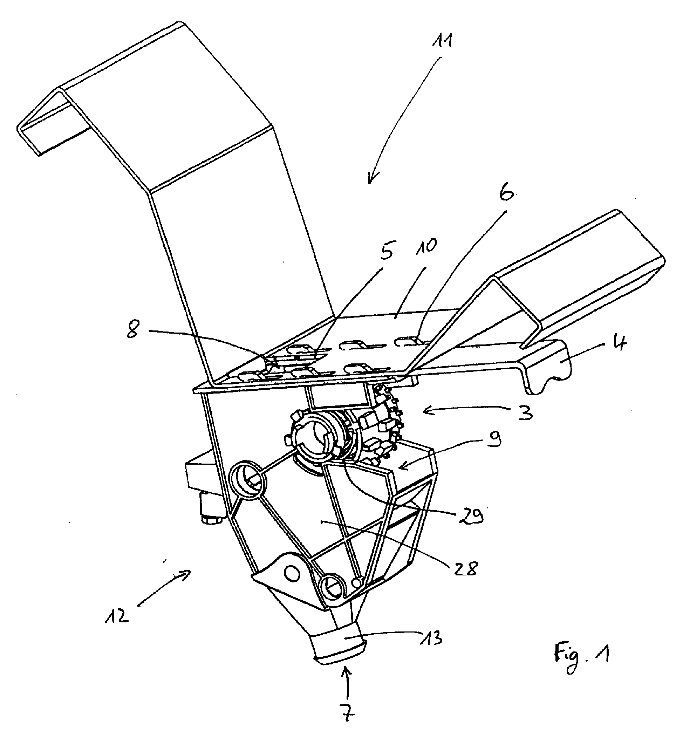

In der Figur 1 ist ein Saatgutbehälter 11 mit einem Boden 10 angedeutet, an dessen Boden über Befestigungsmittel 6 eine Dosiereinrichtung 12 derart fixierbar ist, dass ein Zulauf 8 der Dosiereinrichtung 12 im Bereich einer Bodenöffnung 5 angeordnet ist. Die Bodenöffnung 5 ist über einen Schieber 4 verschließbar.

Beim Betrieb der Dosiereinrichtung 12 wird Saatgut aus dem Saatgutbehälter 11 durch einen Förderkanal 9 von dem Zulauf 8 bis zu einem Dosierabgang 7 gefördert. Die Dosierung und Förderung erfolgt durch ein zumindest teilweise in den Förderkanal 9 ragendes Förderrad 3, an dessen Außenumfang 2 Dosiernocken 27, 27' unterschiedlicher Größe am Außenumfang 2 verteilt angeordnet sind. Der Dosierabgang 7 ist an einem Auslauf 13 vorgesehen, an dem eine Förderleitung zum korrespondierenden Säschar der Verteilmaschine anschließbar ist.

Nach dem Zulauf 8 ist ein Stauraum 33 vorgesehen, der durch das Förderrad 3, Seitenwände 19, 19' und eine, insbesondere federnd, an dem Förderrad 3 anliegende Bodenklappe 17 begrenzt ist. Die Bodenklappe 17 ist um eine Lagerachse 34 rotierbar. Im Stauraum 33 wird das durch den Zulauf 8 hereinströmende Saatgut "zwischengelagert", bis das Förderrad 3 mittels der Dosiernocken 27, 27' das Saatgut durch Rotation in Förderrichtung F weitertransportiert.

Das Förderrad 3 ist über eine Antriebswelle 1 in Form einer mit einer nicht dargestellten Antriebswelle koppelbaren Hohlwelle in einer Rotationsrichtung R antreibbar, durch welche eine Förderstrecke F entlang des Förderkanals 9 bestimmt wird.

Das Förderrad 3 ist in ein Normaldosierrad 14 mit Dosiernocken 27 und ein in Axialrichtung daneben angeordnetes Feindosierrad 15 mit Dosiernocken 27' unterteilt, die durch ein zwischen der Antriebswelle 1 und dem Normaldosierrad 14 sowie dem Feindosierrad 15 angeordnetes Kupplungsstück 16 zwischen einem gemeinsamen Betrieb und einem Einzelbetrieb, bei dem ausschließlich das Feindosierrad 15 angetrieben ist, schaltbar sind. Hierdurch werden zwei Schaltzustände, nämlich ein Schaltzustand zur Normalsaat und ein Schaltzustand zur Feinsaat definiert. Das Normaldosierrad 14 weist eine Seitenfläche 35 auf, die an einer korrespondierenden Seitenfläche 36 des Feindosierrades 15 anliegt und beim Einzelbetrieb gleitend an dieser geführt ist.

Das Förderrad 3 ist in ein Gehäuse 28 der Dosiereinrichtung 12 über eine verschließbare Aufnahme 29 des Gehäuses 28 aufnehmbar und austauschbar, wobei die Antriebswelle 1 seitlich aus dem Gehäuse 28 herausragt und dieses durchsetzend angeordnet ist. Das Förderrad 3 ist vollständig innerhalb des Gehäuses 28 angeordnet und wird durch Seitenwände 19, 19' des Gehäuses 28 während der Rotation des Förderrades 3 gleitend geführt.

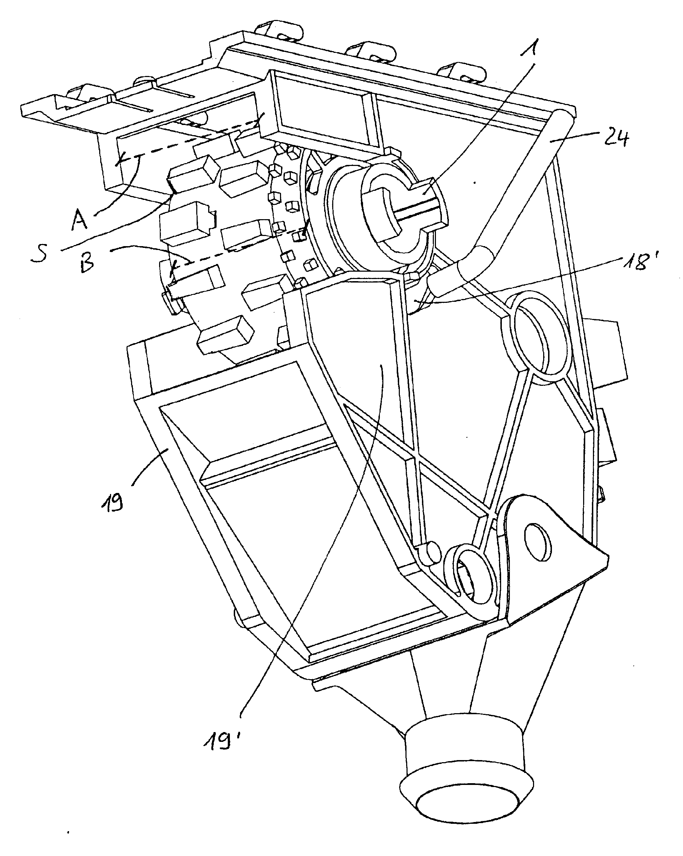

Das Förderrad 3 weist an seinem Außenumfang 2 in Axialrichtung eine Breite B auf, die mit einem möglichst geringen Spiel S versehen einem Abstand A der Seitenwände 19, 19' entspricht (siehe Figur 5).

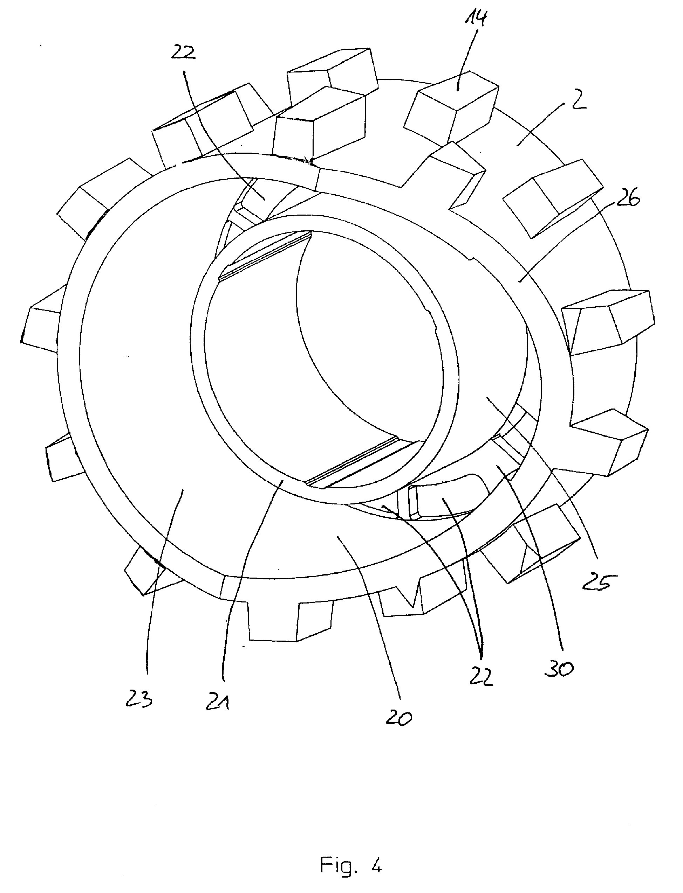

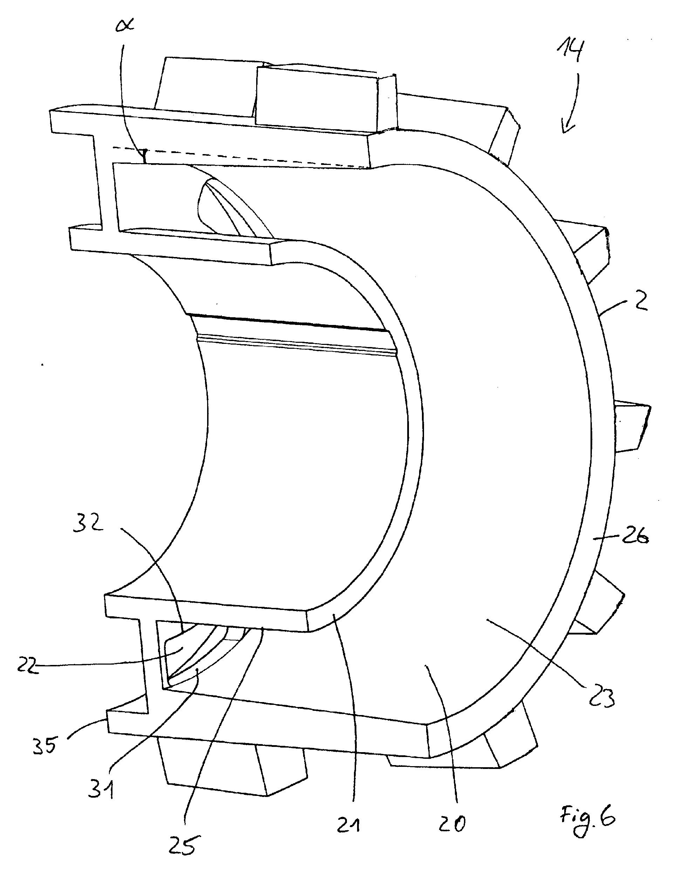

Das Förderrad 3, insbesondere bestehend aus dem Normaldosierrad 14 und dem Feindosierrad 15, weist einen Innenraum 20 auf, der von einer inneren Mantelfläche 23 eines äußeren Hohlzylinders 26 begrenzt ist. In Figur 4 und Figur 6 ist der Einfachheit halber nur das Normaldosierrad 14 dargestellt, wobei eine analoge Ausgestaltung auch für das Feindosierrad 15 gilt, in dem der Innenraum 20 fortgesetzt wird. Nach Innen ist der Innenraum 20 durch eine äußere Mantelfläche 25 eines inneren Hohlzylinders 21 begrenzt, in dem die Antriebswelle 1 sitzt.

Der äußere Hohlzylinder 26 ist mit dem inneren Hohlzylinder 21 im Bereich der Seitenfläche 35 über eine Seitenwand 30 einstückig verbunden. Damit der Innenraum 20 durch die Seitenwand 30 nicht vollständig unterbrochen beziehungsweise getrennt wird, weist die Seitenwand 30 Aussparungen 22 auf. Dies gilt gleichermaßen für das Feindosierrad 15 analog.

Der innere Hohlzylinder 21 erstreckt sich radial vorzugsweise nur über einen Teilbereich, insbesondere maximal die Hälfte, des äußeren Hohlzylinders 26. Hierdurch wird eine weitere Material- und damit Gewichts- und Kostenersparnis erreicht. Insbesondere ist der innere Hohlzylinder 21 gegenüber der Seitenfläche 35 zurückgesetzt.

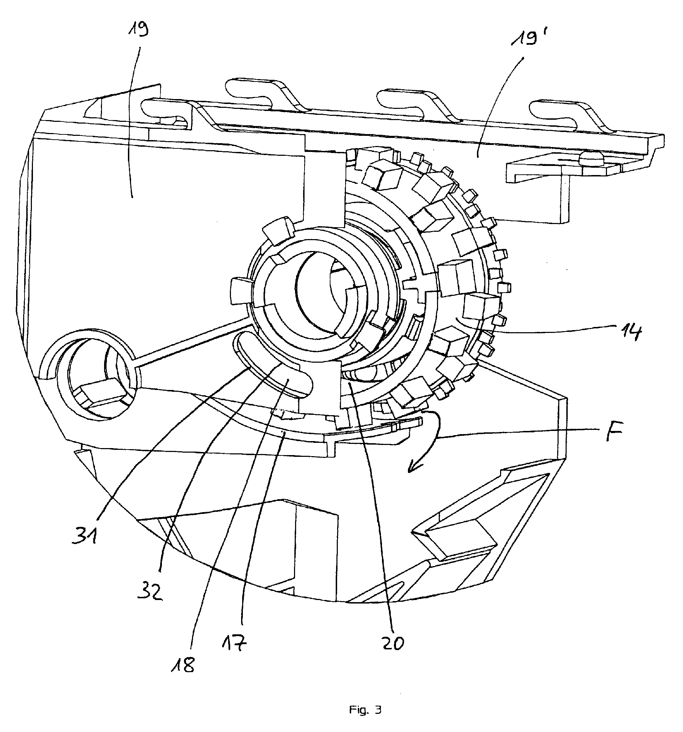

Soweit nun während des Betriebs der Dosiereinrichtung 12 Material wie Verschmutzungen, Saatgut, Dünger oder Teile davon, insbesondere an der Schnittstelle zwischen dem rotierenden Förderrad 3 und dem Gehäuse 28, in den Innenraum 20 gelangt, ist erfindungsgemäß zum Reinigen des Innenraums 20 eine Reinigungsöffnung 18 sowie eine gegenüberliegend angeordnete Reinigungsöffnung 18' in den Seitenwänden 19, 19' vorgesehen. Die Reinigungsöffnungen 18, 18' sind zueinander fluchtend in den Seitenwänden 19, 19' ausgerichtet und vorzugsweise in einem unteren Bereich des Innenraums 20 angeordnet, damit über die Reinigungsöffnungen 18, 18' etwaiges Material möglichst vollständig aus dem Innenraum 20 ausgebracht werden kann. Weiterhin ist es von Vorteil, wenn die Reinigungsöffnungen 18, 18' sich über mindestens 1/8, maximal 1/4 des Umfangs des Förderrades 3 erstrecken. Die Reinigungsöffnungen 18, 18' überragen das Förderrad 3 erfindungsgemäß nicht. Vielmehr ist es erfindungsgemäß von Vorteil, wenn ein Außenradius 31 der, insbesondere als konzentrischer Ringabschnitt ausgebildeten, Reinigungsöffnungen 18, 18' dem Radius der inneren Mantelfläche 23 entspricht, wie es anhand Figur 3 und Figur 6 erkennbar ist. Auf Grund dieser Ausgestaltung erfolgt ein Austrag des unerwünschten Materials aus dem Innenraum 20 allein durch Rotation des Förderrads 3 und/oder Erschütterungen der Verteilmaschine.

Der Innenradius 32 der Reinigungsöffnungen 18, 18' entspricht mit Vorteil dem Radius der äußeren Mantelfläche 25.

Zur Beschleunigung und Unterstützung des Austrags ist es erfindungsgemäß vorgesehen, dass die innere Mantelfläche 23 ein Gefälle α, insbesondere mindestens 1°, vorzugsweise 3°, in Richtung mindestens einer der Reinigungsöffnungen 18, 18' aufweist. Dies kann vorgesehen sein, indem der äußere Hohlzylinder 26 von einer Seite zur anderen dicker wird, wie es in Figur 6 dargestellt ist.

Alternativ oder zusätzlich kann an der inneren Mantelfläche 23 eine Förderschnecke vorgesehen sein, die durch ihre Form und die Rotation des Förderrads 3 für eine Förderung des Materials in Richtung mindestens einer der Reinigungsöffnungen 18, 18' Sorge trägt.

Gemäß der in Figur 5 gezeigten Ausführungsform ist eine Düse 24 in Form einer Leitung vorgesehen, mittels der die Reinigungsöffnung 18' mit Druckluft beaufschlagbar ist, insbesondere durch einen gerichteten Druckluftstrahl parallel zur Axialrichtung des Förderrades 3. Hierdurch wird durch die Druckluft Material in Richtung der Reinigungsöffnung 18 befördert und aus dem Innenraum 20 herausgeblasen. Die Düse 24 ist gemäß einer vorteilhaften Ausführungsform an das Bremssystem des Schleppers oder eine lokale pneumatische Versorgung der Verteilmaschine anschließbar. Zur Energieeinsparung ist es erfindungsgemäß denkbar, die Druckluftbeaufschlagung intermittierend vorzusehen.

### Bezugszeichenliste

- 1: Antriebswelle
- 2: Außenumfang
- 3: Förderrad
- 4: Schieber
- 5: Bodenöffnung
- 6: Befestigungsmittel
- 7: Dosierabgang
- 8: Zulauf
- 9: Förderkanal
- 10: Boden
- 11: Saatgutbehälter
- 12: Dosiereinrichtung
- 13: Auslauf
- 14: Normaldosierrad
- 15: Feindosierrad
- 16: Kupplungsstück
- 17: Bodenklappe
- 18, 18': Reinigungsöffnungen
- 19, 19': Seitenwände
- 20: Innenraum
- 21: innerer Hohlzylinder
- 22: Aussparungen
- 23: innere Mantelfläche
- 24: Düse
- 25: äußere Mantelfläche
- 26: äußerer Hohlzylinder
- 27, 27': Dosiernocken
- 28: Gehäuse
- 29: Aufnahme
- 30: Seitenwand
- 31: Außenradius
- 32: Innenradius
- 33: Stauraum
- 34: Lagerachse
- 35: Seitenfläche
- 36: Seitenfläche
- R: Rotationsrichtung
- F: Förderstrecke
- A: Abstand
- S: Spiel
- B: Breite

## Patentansprüche

1. Dosiereinrichtung zum Dosieren von Saatgut und/oder Dünger aus einem Saatgut- und/oder einem Düngerbehälter (11) mit folgenden Merkmalen:
- einem Förderkanal (9) mit einem Zulauf (8) und einem Dosierabgang (7) und
- einem mit seinem Außenumfang (2) in den Förderkanal (9) ragenden Förderrad (3), an dessen Außenumfang (2) Fördermittel (27) zum dosierten Fördern durch Rotation des Förderrades (3) entlang einer vom Zulauf (8) zum Dosierabgang (7) verlaufenden Förderstrecke (F) angeordnet ist, wobei mindestens eine Reinigungsöffnung (18, 18') ausschließlich einen Innenraum (20) des Förderrads (3) beaufschlagend angeordnet ist,
**dadurch gekennzeichnet, dass**
- der Radius eines Innenumfangs (23) des Förderrades (3) mit zunehmendem Abstand von zumindest einer Ringöffnung (18, 18') abnimmt und/oder
- das Förderrad (3) an seinem Innenumfang (23) eine Förderschnecke aufweist.

2. Dosiereinrichtung nach Anspruch 1, bei der die Reinigungsöffnung (18, 18') die Form eines, insbesondere konzentrisch zum Förderrad (3) ausgebildeten, Ringabschnitts aufweist.

3. Dosiereinrichtung nach Anspruch 2, bei dem ein Außenradius (31) des Ringabschnitts im Wesentlichen, insbesondere exakt, dem Radius des Innenumfangs (23) des Förderrades (3) entspricht.

4. Dosiereinrichtung nach einem der vorhergehenden Ansprüche, bei der die Reinigungsöffnung (18, 18'), insbesondere durch eine seitlich an der Dosiereinrichtung anordenbare oder angebrachte Düse (24), mit einem auf die Reinigungsöffnung (18, 18') ausgerichteten Fluidstrom, insbesondere Druckluft, beaufschlagbar ist.

5. Verteilmaschine zum Ausbringen von Saatgut und/oder Dünger mit einer Dosiereinrichtung nach einem der vorhergehenden Ansprüche pro Säreihe.

6. Verteilmaschine nach Anspruch 5, wobei die Reinigungsöffnung (18, 18'), insbesondere durch einen seitlich an der Dosiereinrichtung (12) anordenbare oder angebrachte Düse (24) mit einem auf die Reinigungsöffnung (18, 18') ausgerichteten Fluidstrom beaufschlagbar ist.

7. Verteilmaschine nach Anspruch 6, bei der die Düse (24) an ein Druckluftsystem der Druckluftbremse angeschlossen ist.

## Claims

1. A dosing device for dosing seeds and/or fertilizer from a seed and/or fertilizer container (11) with the following features:
- a conveying channel (9) with an inlet (8) and a dosing outlet (7) and
- a conveying wheel (3) projecting with its outer periphery (2) into the conveying channel (9), on the outer periphery (2) of which conveying wheel conveying means (27) are arranged for the dosed conveying by rotation of the conveying wheel (3) along a conveying section (F) running from the inlet (8) to the dosing outlet (7), wherein at least one cleaning opening (18, 18') is arranged acting exclusively on an interior (20) of the conveying wheel (3),
**characterized in that**
- the radius of an inner periphery (23) of the conveying wheel (3) decreases with an increasing distance from at least one ring opening (18, 18') and/or
- the conveying wheel (3) has a conveying screw on its inner periphery (23).

2. The dosing device according to claim 1, in which the cleaning opening (18, 18') has the form of a ring section, constructed in particular concentrically to the conveying wheel (3).

3. The dosing device according to claim 2, in which an outside radius (31) of the ring section corresponds substantially, in particular exactly, to the radius of the inner periphery (23) of the conveying wheel (3).

4. The dosing device according to one of the preceding claims, in which the cleaning opening (18, 18') is able to be acted upon by a fluid flow, in particular compressed air, aligned to the cleaning opening (18, 18'), in particular through a nozzle (24) which is mounted or is able to be arranged laterally on the dosing device.

5. A distributing machine for the applying of seeds and/or fertilizer with a dosing device according to one of the preceding claims.

6. The distributing machine according to claim 5, wherein the cleaning opening (18, 18') is able to be acted upon by a fluid flow aligned to the cleaning opening (18, 18'), in particular through a nozzle (24) which is mounted or is able to be arranged laterally on the dosing device (12).

7. The distributing machine according to claim 6, in which the nozzle (24) is connected to a compressed air system of the compressed air brake.

## Revendications

1. Dispositif de dosage pour le dosage de semences et/ou d'engrais à partir d'un conteneur de semences et/ou d'engrais (11) comportant les caractéristiques suivantes :
- un canal de transport (9) avec une voie d'amenée (8) et une sortie de dosage (7) et
- une roue de transport (3) dépassant en saillie par sa circonférence extérieure (2) dans le canal de transport (9), sur la circonférence extérieure (2) de laquelle des moyens de transport (27) sont disposés pour le transport dosé par rotation de la roue de transport (3) le long d'une voie de transport (F) s'étendant de la voie d'amenée (8) à la sortie de dosage (7), dans lequel au moins une ouverture de nettoyage (18,18') est disposée de manière à solliciter exclusivement un espace intérieur (20) de la roue de transport (3),
**caractérisé en ce que**
- le rayon d'une circonférence intérieure (23) de la roue de transport (3) diminue à mesure que l'espacement par rapport à au moins une ouverture annulaire (18,18') augmente et/ou
- la roue de transport (3) présente sur sa circonférence intérieure (23) une vis convoyeuse.

2. Dispositif de dosage selon la revendication 1, dans lequel l'ouverture de nettoyage (18,18') présente la forme d'une portion annulaire, réalisée notamment concentriquement à la roue de transport (3).

3. Dispositif de dosage selon la revendication 2, dans lequel un rayon extérieur (31) de la portion annulaire correspond essentiellement, notamment exactement au rayon de la circonférence intérieure (23) de la roue de transport (3).

4. Dispositif de dosage selon une des revendications précédentes, dans lequel l'ouverture de nettoyage (18,18') peut être sollicitée notamment par une buse (24) montée ou pouvant être disposée latéralement sur le dispositif de dosage par un courant de fluide, notamment de l'air comprimé, aligné sur l'ouverture de nettoyage (18,18').

5. Epandeur pour épandre des semences et/ou engrais avec un dispositif de dosage selon une des revendications précédentes par ligne de semis.

6. Epandeur selon la revendication 5, dans lequel l'ouverture de nettoyage (18,18') peut être sollicitée notamment par une buse (24) montée ou pouvant être disposée latéralement sur le dispositif de dosage (12) par un courant de fluide, notamment de l'air comprimé, aligné sur l'ouverture de nettoyage (18,18').

7. Epandeur selon la revendication 6, dans lequel la buse (24) est raccordée à un système d'air comprimé du frein à air comprimé.
